# EUROPEAN PATENT SPECIFICATION

(11) **EP 2 831 162 B1**
(45) Date of publication and mention of the grant of the patent: **02.08.2017**
(21) Application number: 12872730.2
(22) Date of filing: 30.03.2012
(51) Int. Cl.: C08K 5/01

(54) **TIRE THREAD FOR IMPROVED WEAR PROPERTIES**
REIFENLAUFFLÄCHE FÜR VERBESSERTE VERSCHLEISSEIGENSCHAFTEN
BANDE DE ROULEMENT DE PNEUMATIQUE POUR DES PROPRIÉTÉS À L'USURE AMÉLIORÉES

(43) Date of publication of application: 04.02.2015
(73) Proprietor: Compagnie Générale des Etablissements Michelin, 63000 Clermont-Ferrand (FR)
(72) Inventor: CHEKANOV, Yuri, A., Simpsonville, SC 29681 (US); STUBBLEFIELD, Raymond, L., Greenville, SC 29605 (US)
(74) Representative: Casalonga
(86) International application number: PCT/US2012/031339
(87) International publication number: WO 2013/147827

(56) References cited:
- WO-A1-2012/012133
- US-A1- 2010 204 359
- US-B1- 6 376 587

## Description

### BACKGROUND OF THE INVENTION

### Field of the Invention

This invention relates generally to tires for vehicles and more particularly, to tread sculpture and tread materials.

### Description of the Related Art

It is known in the industry that tire designers must often compromise on certain characteristics of the tires they are designing. Changing a tire design to improve one characteristic of the tire will often result in a compromise; *i.e.,* an offsetting decline in another tire characteristic. One such comprise exists between tire wear and wet braking. Tire wear may be improved by increasing the amount of polybutadiene blended into the tread's rubber composition. However, increasing the polybutadiene content in the tread's rubber composition typically results in a loss of the wet braking performance that is known to be improved, for example, by decreasing the polybutadiene content of the tire tread.

Tire designers and those conducting research in the tire industry search for materials and tire structures that can break some of the known compromises. It would be desirable to provide new tire designs that break the compromise between wear and wet braking.

### SUMMARY OF THE INVENTION

Particular embodiments of the present invention include tires and treads for vehicles that surprisingly break a compromise faced by tire designers; *i.e.,* an increase in the tread wear of a tire often results in a decrease in the wet braking performance of the tire. Embodiments include a tread for a tire, the tread comprising a rubber composition that is based upon a cross-linkable rubber composition, the cross-linkable rubber composition comprising, per hundred parts by weight of rubber, a functionalized styrene-butadiene rubber in a majority proportion and a polybutadiene rubber. In order to provide the break in the wet/wear comprise, the SBR is a functionalized rubber having, in the butadiene portion, a trans-1,4 content of between 30 wt. % and 70 wt. %. A second rubber elastomer included in the rubber composition is a polybutadiene rubber.

The rubber composition further includes a plasticizing system that comprises a plasticizing resin having a glass transition temperature (Tg) of at least 25 °C and a plasticizing liquid. The plasticizing system is included in the rubber composition in an effective amount to provide the rubber composition with a glass transition temperature of between -25 °C and -15 °C and a dynamic modulus G* at 60 °C of between 0.8 MPa and 1.3 MPa.

In addition to the plasticizing system, particular embodiments of the rubber composition useful for the manufacture of rubber articles, including tires and treads, include between 60 phr and 125 phr of a silica filler and further, a sulfur curing system.

In particular embodiments, the SBR may be functionalized with a functional group selected from an amino moiety, a silanol moiety, an alkoxysilane moiety, a carboxylic moiety, a polyether moiety or combinations thereof. Such functional groups may be attached to the backbone, to an end of the chain of the SBR or along the chain of the SBR or combinations thereof.

The foregoing and other objects, features and advantages of the invention will be apparent from the following more detailed descriptions of particular embodiments of the invention.

### DETAILED DESCRIPTION OF PARTICULAR EMBODIMENTS

Particular embodiments of the present invention include tires and treads for vehicles that surprisingly break a compromise faced by tire designers; *i.e.,* an increase in the tread wear of a tire often results in a decrease in the wet braking performance of the tire. Particular embodiments also include methods for their manufacture. This compromise may be broken by forming unique tire treads from a rubber composition that includes (1) a functionalized styrene-butadiene rubber having a high *trans*-1,4 content, (2) a polybutadiene rubber and (3) a plasticizing system having both a plasticizing resin with a high glass transition temperature (Tg) and a plasticizing liquid.

In preparing the rubber compositions forming the tires and tire treads disclosed herein, the ratio of the plasticizing liquid to the plasticizing resin is adjusted to provide the rubber composition forming the tire treads with a glass transition temperature (Tg) of between -25 °C and -15 °C and a dynamic modulus G* at 60 °C of between 0.8 MPa and 1.3 MPa. Surprisingly, when the rubber composition includes a majority amount of the functionalized SBR having the high *trans*-1,4 content and the plasticizing system is properly adjusted to provide the desired Tg and dynamic modulus, excellent braking and wear properties of the tire tread can be achieved.

As used herein, "phr" is "parts per hundred parts of rubber by weight" and is a common measurement in the art wherein components of a rubber composition are measured relative to the total weight of rubber in the composition, *i.e.,* parts by weight of the component per 100 parts by weight of the total rubber(s) in the composition.

As used herein, elastomer and rubber are synonymous terms.

As used herein, "based upon" is a term recognizing that embodiments of the present invention are made of vulcanized or cured rubber compositions that were, at the time of their assembly, uncured. The cured rubber composition is therefore "based upon" the uncured rubber composition. In other words, the cross-linked rubber composition is based upon or comprises the constituents of the cross-linkable rubber composition.

As is known generally, a tire tread is the road-contacting portion of a vehicle tire that extends circumferentially about the tire. It is designed to provide the handling characteristics required by the vehicle; *e.g*., traction, dry braking, wet braking, cornering and so forth - all being preferably provided with a minimum amount of noise being generated and at a low rolling resistance. The rubber compositions disclosed herein are useful for forming at least a portion of the tire treads, and in other particular embodiments, the entire tire tread to provide the improved performance in braking and wear of the treads that are included in the present invention.

As noted above, particular embodiments of the present invention include treads and tires having such treads manufactured from a rubber composition that includes both a functionalized styrene-butadiene rubber (SBR) having a high *trans*-1,4 content and a polybutadiene rubber (BR). BR is a common rubber component useful in many rubber articles, including tires, and is a homopolymer of conjugated 1,3-butadiene.

SBR is a copolymer of styrene and 1, 3-butadiene and is one of the most commonly used synthetic rubbers. The microstructure of SBR is typically described in terms of the amount of bound styrene and the form of the butadiene portion of the polymer. A typical SBR that is often suitable for use in tires is around 25 wt. % bound styrene. Materials having a very high content of bound styrene, *e.g*., around 80 wt. %, are identified as high styrene resins and are not suitable as an elastomer for manufacturing treads. Particular embodiments of the present invention may utilize an SBR having a bound styrene content of between 3 wt. % and 40 wt. % or alternatively between 10 wt. % and 35 wt. %, between 15 wt. % and 28 wt. % or between 30 wt. % and 40 wt. % bound styrene.

Because of the double bond present in the butadiene portion of the SBR, the butadiene portion is made up of three forms: *cis*-1,4, *trans*-1,4 and vinyl-1,2. The SBR materials suitable for use in the rubber compositions disclosed herein are those having a high *trans*-1,4 content of at least 30 wt. % or alternatively between 30 wt. % and 70 wt. %, between 35 wt. % and 55 wt. % or between 35 wt. % and 45 wt. %.

Methods for determining the microstructure of the butadiene portion of the SBR materials are well known to those having ordinary skill in the art and include, for example, NMR methods and infrared spectroscopy methods. In one suitable NMR spectroscopy method, a carbon-13 NMR analyses may be performed using, for example, a Bruker AM250 spectrometer. The nominal frequency of carbon-13 is 62.9 MHz and the spectra are recorded without the "nuclear Overhauser effect" (NOE) to ensure quantitative results. The spectral width is 240 ppm. The angle pulse used is a 90° pulse, the duration of which is 5 µs. Low-power decoupling with a wide proton band are used to eliminate scalar ¹H-carbon-13 coupling during carbon-13 acquisition. The sequence repetition time is 4 seconds. The number of transients accumulated to increase the signal/noise ratio is 8192. The spectra are calibrated against the CDCl₃ band at 77 ppm.

Functionalized rubbers, *i.e.,* those appended with active moieties, are well known in the industry. The elastomers may be functionalized by attaching these active moieties to the polymer backbone, along the branches of the polymer or at the branch ends of the polymer. Examples of functionalized elastomers include silanol or polysiloxane functionalized elastomers, examples of which may be found in US Patent No. 6,013,718, which is hereby fully incorporated by reference. Other examples of functionalized elastomers include those having alkoxysilane groups as described in US 5,977,238, carboxylic groups as described in US 6,815,473, polyether groups as described in US 6,503,973 or amino groups as described in US 6,800,582 and are all incorporated herein by reference.

In particular embodiments of the present invention, the SBR is a functionalized elastomer having functional moieties attached to at least a portion of the total number of branch ends or along the branches of the butadiene portion of the polymer. Such functional moieties may include, for example, amino groups, silanol groups, alkoxysilane groups, carboxylic groups or polyether groups. In particular embodiments, the functional moieties may be selected from amino groups, silanol groups or alkoxysilane groups. In particular embodiments, the functionalized SBR may include a mixture of two or more different such functionalized SBR's or limited to one of the functionalized SBR's.

The rubber compositions disclosed herein may include between 50 phr and 85 phr of the functionalized high *trans*-1,4 SBR or alternatively between 50 phr and 75 phr, between 53 phr and 75 phr or between 60 phr and 80 phr. Likewise the rubber compositions may include between 15 phr and 50 phr of the polybutadiene rubber or alternatively between 25 phr and 50 phr, between 25 phr and 47 phr or between 20 phr and 40 phr.

In addition to the diene elastomer and reinforcing filler, particular embodiments of the rubber composition disclosed herein further include a plasticizing system. The plasticizing system may provide both an improvement to the processability of the rubber mix and a means for adjusting the rubber composition's dynamic modulus and glass transition temperature. Suitable plasticizing systems include both a plasticizing liquid and a plasticizing resin to achieve the desired braking and wear characteristics of the tread.

Suitable plasticizing liquids may include any liquid known for its plasticizing properties with diene elastomers. At room temperature (23 °C), these liquid plasticizers or these oils of varying viscosity are liquid as opposed to the resins that are solid. Examples include those derived from petroleum stocks, those having a vegetable base and combinations thereof. Examples of oils that are petroleum based include aromatic oils, paraffinic oils, naphthenic oils, MES oils, TDAE oils and so forth as known in the industry. Also known are liquid diene polymers, the polyolefin oils, ether plasticizers, ester plasticizers, phosphate plasticizers, sulfonate plasticizers and combinations of liquid plasticizers.

Examples of suitable vegetable oils include sunflower oil, soybean oil, safflower oil, corn oil, linseed oil and cotton seed oil. These oils and other such vegetable oils may be used singularly or in combination. In some embodiments, sunflower oil having a high oleic acid content (at least 70 weight percent or alternatively, at least 80 weight percent) is useful, an example being AGRI-PURE 80, available from Cargill with offices in Minneapolis, MN. In particular embodiments of the present invention, the selection of suitable plasticizing oils is limited to a vegetable oil having a high oleic acid content.

The amount of plasticizing liquid useful in any particular embodiment of the present invention depends upon the particular circumstances and the desired result. In general, for example, the plasticizing liquid may be present in the rubber composition in an amount of between 5 phr and 50 phr or alternatively, between 5 phr and 40 phr, between 5 phr and 30 phr or between 5 phr and 25 phr. Since both a plasticizing liquid and a plasticizing hydrocarbon resin are included in the plasticizing system, the amount of both types of plasticizers are adjusted as described below to obtain the desired physical characteristics of the tread.

A plasticizing hydrocarbon resin is a hydrocarbon compound that is solid at ambient temperature (*e.g*., 23 °C) as opposed to liquid plasticizing compounds, such as plasticizing oils. Additionally a plasticizing hydrocarbon resin is compatible, *i.e*., miscible, with the rubber composition with which the resin is mixed at a concentration that allows the resin to act as a true plasticizing agent, *e.g*., at a concentration that is typically at least 5 phr.

Plasticizing hydrocarbon resins are polymers/oligomers that can be aliphatic, aromatic or combinations of these types, meaning that the polymeric base of the resin may be formed from aliphatic and/or aromatic monomers. These resins can be natural or synthetic materials and can be petroleum based, in which case the resins may be called petroleum plasticizing resins, or based on plant materials. In particular embodiments, although not limiting the invention, these resins may contain essentially only hydrogen and carbon atoms.

The plasticizing hydrocarbon resins useful in particular embodiment of the present invention include those that are homopolymers or copolymers of cyclopentadiene (CPD) or dicyclopentadiene (DCPD), homopolymers or copolymers of terpene, homopolymers or copolymers of C₅ cut and mixtures thereof.

Such copolymer plasticizing hydrocarbon resins as discussed generally above may include, for example, resins made up of copolymers of (D)CPD/ vinyl-aromatic, of (D)CPD/ terpene, of (D)CPD/ C₅ cut, of terpene/ vinyl-aromatic, of C₅ cut/ vinyl-aromatic and of combinations thereof.

Terpene monomers useful for the terpene homopolymer and copolymer resins include alpha-pinene, beta-pinene and limonene. Particular embodiments include polymers of the limonene monomers that include three isomers: the L-limonene (laevorotatory enantiomer), the D-limonene (dextrorotatory enantiomer), or even the dipentene, a racemic mixture of the dextrorotatory and laevorotatory enantiomers.

Examples of vinyl aromatic monomers include styrene, alpha- methylstyrene, ortho-, meta-, para-methylstyrene, vinyl-toluene, para-tertiobutylstyrene, methoxystyrenes, chloro-styrenes, vinyl-mesitylene, divinylbenzene, vinylnaphthalene, any vinyl-aromatic monomer coming from the C₉ cut (or, more generally, from a C₈ to C₁₀ cut). Particular embodiments that include a vinyl-aromatic copolymer include the vinyl-aromatic in the minority monomer, expressed in molar fraction, in the copolymer.

Particular embodiments of the present invention include as the plasticizing hydrocarbon resin the (D)CPD homopolymer resins, the (D)CPD/ styrene copolymer resins, the polylimonene resins, the limonene/ styrene copolymer resins, the limonene/ D(CPD) copolymer resins, C₅ cut/ styrene copolymer resins, C₅ cut/ C₉ cut copolymer resins, and mixtures thereof.

Commercially available plasticizing resins that include terpene resins suitable for use in the present invention include a polyalphapinene resin marketed under the name Resin R2495 by Hercules Inc. of Wilmington, DE. Resin R2495 has a molecular weight of about 932, a softening point of about 135°C and a glass transition temperature of about 91°C. Another commercially available product that may be used in the present invention includes DERCOLYTE L120 sold by the company DRT of France. DERCOLYTE L120 polyterpene-limonene resin has a number average molecular weight of about 625, a weight average molecular weight of about 1010, an Ip of about 1.6, a softening point of about 119°C and has a glass transition temperature of about 72° C. Still another commercially available terpene resin that may be used in the present invention includes SYLVARES TR 7125 and/or SYLVARES TR 5147 polylimonene resin sold by the Arizona Chemical Company of Jacksonville, FL. SYLVARES 7125 polylimonene resin has a molecular weight of about 1090, has a softening point of about 125° C, and has a glass transition temperature of about 73°C while the SYLVARES TR 5147 has a molecular weight of about 945, a softening point of about 120 °C and has a glass transition temperature of about 71° C.

Other suitable plasticizing hydrocarbon resins that are commercially available include C₅ cut/ vinyl-aromatic styrene copolymer, notably C₅ cut / styrene or C₅ cut / C₉ cut from Neville Chemical Company under the names SUPER NEVTAC 78, SUPER NEVTAC 85 and SUPER NEVTAC 99; from Goodyear Chemicals under the name WINGTACK EXTRA; from Kolon under names HIKOREZ T1095 and HIKOREZ T1100; and from Exxon under names ESCOREZ 2101 and ECR 373.

Yet other suitable plasticizing hydrocarbon resins that are limonene/styrene copolymer resins that are commercially available include DERCOLYTE TS 105 from DRT of France; and from Arizona Chemical Company under the name ZT115LT and ZT5100.

It may be noted that the glass transition temperatures of plasticizing resins may be measured by Differential Scanning Calorimetry (DCS) in accordance with ASTM D3418 (1999). In particular embodiments, useful resins may be have a glass transition temperature that is at least 25° C or alternatively, at least 40° C or at least 60° C or between 25° C and 95° C, between 40° C and 85° C or between 60° C and 80° C.

The amount of plasticizing hydrocarbon resin useful in any particular embodiment of the present invention depends upon the particular circumstances and the desired result and may be present in an amount of between 40 phr and 60 phr or alternatively, between 40 phr and 55 phr or between 40 phr and 50 phr. As noted above, since both a plasticizing liquid and a plasticizing hydrocarbon resin are included in the plasticizing system, the amount of both types of plasticizers are adjusted as described below to obtain the desired physical characteristics of the tread to improve both the wear and braking properties.

The amount of the plasticizing system is adjusted to provide the rubber composition with a glass transition temperature of between -25 °C and -15 °C or alternatively between -20 °C and -15 °C and a dynamic modulus G* at 60 °C of between 0.8 MPa and 1.3 MPa or alternatively between 0.8 MPa and 1.2 MPa or between 0.9 MPa and 1.3 MPa, both measured in accordance with ASTM D5992-96. As such, the ratio of the amount of liquid plasticizer to the amount of plasticizing resin may be adjusted to achieve the desired physical properties of the rubber composition such that, when the high *trans*-1,4 functionalized SBR is used as the majority elastomer in the rubber compositions as disclosed herein, the surprising break in the wet braking-wear compromise is achieved. Such ratios may range from between 0.1 and 0.7 or alternatively between 0.1 and 0.35 or 0.1 and 0.25.

The rubber compositions disclosed herein further include a reinforcing filler of silica. Useful silica reinforcing fillers known in the art include fumed, precipitated and/or highly dispersible silica (known as "HD" silica). Examples of highly dispersible silicas include Ultrasil 7000 and Ultrasil 7005 from Degussa, the silicas Zeosil 1165MP, 1135MP and 1115MP from Rhodia, the silica Hi-Sil EZ150G from PPG and the silicas Zeopol 8715, 8745 and 8755 from Huber. In particular embodiments, the silica may have a BET surface area, for example, of between 60 m²/g and 250 m²/g or alternatively between 80 m²/g and 230 m²/g. The silica filler may be added to the rubber composition in a quantity of between 60 phr and 125 phr or alternatively between 70 phr and 120 phr, between 80 phr and 110 phr or between 85 phr and 110 phr.

In particular embodiments of the present invention, other reinforcing fillers are excluded so that, for example, no or very little (< 10 phr) carbon black is used.

For coupling the silica filler to the diene elastomer, a coupling agent that is at least bifunctional provides a sufficient chemical and/or physical connection between the inorganic reinforcement filler and the diene elastomer. Examples of such coupling agents include bifunctional organosilanes or polyorganosiloxanes. Such coupling agents and their use are well known in the art. The coupling agent may optionally be grafted beforehand onto the diene elastomer or onto the inorganic reinforcing filler as is known. Otherwise it may be mixed into the rubber composition in its free or non-grafted state. One useful coupling agent is X 50-S, a 50-50 blend by weight of Si69 (the active ingredient) and N330 carbon black, available from Evonik Degussa.

In the rubber compositions according to the invention, the content of coupling agent may range between 2 phr and 15 phr or alternatively between 5 phr and 10 phr.

The rubber compositions disclosed herein may be cured with any suitable curing system including a peroxide curing system or a sulfur curing system. Particular embodiments are cured with a sulfur curing system that includes free sulfur and may further include, for example, one or more of accelerators, stearic acid and zinc oxide. Suitable free sulfur includes, for example, pulverized sulfur, rubber maker's sulfur, commercial sulfur, and insoluble sulfur. In particular embodiments of the rubber compositions disclosed herein, the amount of free sulfur included in the rubber composition may range, for example, between 0.5 phr and 6 phr. Particular embodiments may include no free sulfur added in the curing system but instead include sulfur donors.

Accelerators are used to control the time and/or temperature required for vulcanization and to improve the properties of the cured rubber composition. Particular embodiments of the present invention include one or more accelerators. One example of a suitable primary accelerator useful in the present invention is a sulfenamide. Examples of suitable sulfenamide accelerators include n-cyclohexyl -2-benzothiazole sulfenamide (CBS), N-tert-butyl-2-benzothiazole Sulfenamide (TBBS), N-Oxydiethyl-2-benzthiazolsulfenamid (MBS) and N'-dicyclohexyl-2-benzothiazolesulfenamide (DCBS). Combinations of accelerators are often useful to improve the properties of the cured rubber composition and the particular embodiments include the addition of secondary accelerators.

Particular embodiments may include as a secondary accelerant the use of a moderately fast accelerator such as, for example, diphenylguanidine (DPG), triphenyl guanidine (TPG), diorthotolyl guanidine (DOTG), o-tolylbigaunide (OTBG) or hexamethylene tetramine (HMTA). Such accelerators may be added in an amount, for example, of up to 4 phr, between 0.5 and 4 phr, between 0.5 and 3 phr or between 1 and 2 phr. Particular embodiments may exclude the use of fast accelerators and/or ultra-fast accelerators such as, for example, the fast accelerators: disulfides and benzothiazoles; and the ultra-accelerators: thiurams, xanthates, dithiocarbamates and dithiophosphates.

Other additives can be added to the rubber compositions disclosed herein as known in the art. Such additives may include, for example, some or all of the following: antidegradants, antioxidants, fatty acids, waxes, stearic acid and zinc oxide. Examples of antidegradants and antioxidants include 6PPD, 77PD, IPPD and TMQ and may be added to rubber compositions in an amount, for example, of from 0.5 phr and 5 phr. Zinc oxide may be added in an amount, for example, of between 1 phr and 6 phr or alternatively, of between 1.5 phr and 4 phr. Waxes may be added in an amount, for example, of between 1 phr and 5 phr.

The rubber compositions that are embodiments of the present invention may be produced in suitable mixers, in a manner known to those having ordinary skill in the art, typically using two successive preparation phases, a first phase of thermo-mechanical working at high temperature, followed by a second phase of mechanical working at lower temperature.

The first phase of thermo-mechanical working (sometimes referred to as "non-productive" phase) is intended to mix thoroughly, by kneading, the various ingredients of the composition, with the exception of the vulcanization system. It is carried out in a suitable kneading device, such as an internal mixer or an extruder, until, under the action of the mechanical working and the high shearing imposed on the mixture, a maximum temperature generally between 120° C and 190° C is reached.

After cooling of the mixture, a second phase of mechanical working is implemented at a lower temperature. Sometimes referred to as "productive" phase, this finishing phase consists of incorporating by mixing the vulcanization (or cross-linking) system (sulfur or other vulcanizing agent and accelerator(s)), in a suitable device, for example an open mill. It is performed for an appropriate time (typically for example between 1 and 30 minutes) and at a sufficiently low temperature lower than the vulcanization temperature of the mixture, so as to protect against premature vulcanization.

The rubber composition can be formed into useful articles, including treads for use on vehicle tires and in particular embodiments for tire treads for use on passenger cars and/or light trucks. The treads may be formed as tread bands and then later made a part of a tire or they be formed directly onto a tire carcass by, for example, extrusion and then cured in a mold. As such, tread bands may be cured before being disposed on a tire carcass or they may be cured after being disposed on the tire carcass. Typically a tire tread is cured in a known manner in a mold that molds the tread elements into the tread, including, e.g., the grooves, ribs and/or blocks molded into the tread.

It should be noted that the foregoing included detailed references to particular embodiments of the present invention, which were provided by way of explanation of the invention. For example, features illustrated or described as part of one embodiment can be used with another embodiment to yield still a third embodiment. The invention is further illustrated by the following examples, which are to be regarded only as illustrations and not delimitative of the invention in any way. Following is a description of the testing procedures used in the examples that follow.

Wet braking for a tire mounted on an automobile fitted with an ABS braking system was determined by measuring the distance necessary to go from 50 MPH to 0 MPH upon sudden braking on wetted ground (asphalt concrete). A value greater than that of the control, which is arbitrarily set to 100, indicates an improved result, that is to say a shorter braking distance.

Wear resistance of a tire mounted on an automobile was measured by subjecting the tire to actual on-road travel and measuring its wear rate (mm of tread lost per 1000 miles) at between 10,000 and 12,000 miles traveled. A value greater than that of the control, arbitrarily set to 100, indicates an improved result, that is to say less wear rate.

Dynamic properties (Tg and G*) for the rubber compositions were measured on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress of a constant 0.7 MPa and at a frequency of 10 Hz over a temperature sweep from -60° C to 100° C with the temperature increasing at a rate of 1.5° C/min. The shear modulus G* at 60° C was captured and the temperature at which the max tan delta occurred was recorded as the glass transition temperature, Tg.

### Example 1

Rubber compositions were prepared using the components shown in Tables **1** and **2.** The amount of each component making up the rubber compositions shown in Tables **1** and **2** are provided in parts per hundred parts of rubber by weight (phr).

**Table 1 - Rubber Formulations**

| **Formulations** | **W1** | **F1A** | **F1B** | **W2** | **F2** | **W3** | **F3A** | **F3B** |
|---|---|---|---|---|---|---|---|---|
| SBR | 54 | 54 | 54 | 54 | 54 | 54 | 54 | 54 |
| *trans*-1,4, wt.% | 18.4 | 38.1 | 38.1 | 18.4 | 38.1 | 18.4 | 38.1 | 38.1 |
| functionalization | silanol | silanol | amino | silanol | silanol | silanol | silanol | amino |
| BR | 46 | 46 | 46 | 46 | 46 | 46 | 46 | 46 |
| Carbon Black, N234 | 6.6 | 6.6 | 6.6 | 6.6 | 6.6 | 6.6 | 6.6 | 6.6 |
| Silica | 85.5 | 87.5 | 87.5 | 85.5 | 87.5 | 107.5 | 107 | 107 |
| Plasticizing Oil | 12.1 | 6 | 6 | 14.6 | 7 | 21.5 | 12.8 | 14.2 |
| Polyterpene Resin | 33 | 44 | 44 | 37.3 | 50 | 36.4 | 48.2 | 47.6 |
| Silane Coupling Agent | 6.4 | 6.6 | 6.6 | 6.4 | 6.6 | 8.1 | 8.6 | 8.6 |
| Additives (Wax & 6PPD) | 3.5 | 3.5 | 3.5 | 3.5 | 3.5 | 3.5 | 3.5 | 3.5 |
| Curing Package | 8.5 | 8.5 | 8.5 | 8.5 | 8.5 | 8.5 | 8.5 | 8.5 |
| | | | | | | | | |

| **Physical Properties** | | | | | | | | |
|---|---|---|---|---|---|---|---|---|
| Tg, °C | -16 | -18 | -19 | -18 | -16 | -15 | -15 | -16 |
| G* at 60 °C, MPa | 1.0 | 1.1 | 1.0 | 0.8 | 0.9 | 1.1 | 1.1 | 1.0 |
| Wet Braking, Indexed | 100* | 106 | 102 | 100 | 106 | 105 | 108 | 106 |
| Wear Resistance, Indexed | 100* | 108 | 110 | 90 | 101 | 89 | 100 | 102 |

| | | | | | | | | |
|---|---|---|---|---|---|---|---|---|
| * - Index Tire | | | | | | | | |

The polyterpene resin was SYLVARES TR-5147, a polylimonene resin available from Arizona Chemical, Savannah, GA. The plasticizing oil was sunflower oil. The silica was ZEOSIL 160, a highly dispersible silica available from Rhodia having a BET of 160 m²/g. The plasticizing oil was AGRI-PURE 80. The silane coupling agent was Si69 available from Evonik Degussa. The curative package included sulfur, accelerators, zinc oxide and stearic acid.

**Table 2 - Rubber Formulations**

| **Formulations** | **W4** | **F4** | **W5** | **F5** | **W6** | **F6** | **W7** | **F7** |
|---|---|---|---|---|---|---|---|---|
| SBR | 54 | 54 | 80 | 80 | 80 | 80 | 70 | 70 |
| *trans*-1,4, wt.% | 18.4 | 38.1 | 18.4 | 38.1 | 18.4 | 38.1 | 18.4 | 41.7 |
| functionalization | silanol | silanol | amino | silanol | silanol | silanol | silanol | amino |
| BR | 46 | 46 | 20 | 20 | 20 | 20 | 30 | 30 |
| Carbon Black, N234 | 6.6 | 6.6 | 6.6 | 6.6 | 6.6 | 6.6 | 6.6 | 8.6 |
| Silica | 107 | 107 | 85.5 | 87.5 | 107.5 | 107 | 107 | 107 |
| Plasticizing Oil | 25.3 | 18 | 25.6 | 13 | 35.5 | 27 | 33 | 12.5 |
| Polyterpene Resin | 40.9 | 50 | 23.8 | 41 | 28.5 | 41 | 25 | 51.4 |
| Silane Coupling Agent | 8.1 | 8.6 | 6.4 | 6.6 | 6.1 | 6.5 | 8.6 | 8.6 |
| Additives (Wax & 6PPD) | 3.5 | 3.5 | 3.5 | 3.5 | 3.5 | 3.5 | 3.5 | 3.5 |
| Curing Package | 8.5 | 8.5 | 8.5 | 8.5 | 8.5 | 8.5 | 8.5 | 8.5 |
| | | | | | | | | |

| **Physical Properties** | | | | | | | | |
|---|---|---|---|---|---|---|---|---|
| Tg, °C | -18 | -18 | -16 | -17 | -18 | -20 | -18 | -17 |
| G* at 60 °C, MPa | 0.9 | 0.9 | 0.9 | 0.9 | 0.8 | 0.8 | 1.1 | 1.1 |
| Wet Braking, Indexed | 107 | 113 | 103 | 109 | 112 | 111 | 101 | 100 |
| Wear Resistance, Indexed | 83 | 96 | 55 | 81 | 42 | 76 | 80 | 100 |

The witness formulations W1-W7 all included a functionalized styrene-butadiene rubber having *trans*-1,4 content of 18.4 wt. % functionalized with an end-chain silanol moiety. Formulations F1-F6 included functionalized SBR having *trans*-1,4 content of 38.1 wt. % functionalized with either a silanol or an amino moiety as indicated in Tables 1 and 2. The silanol functional group was attached to branch ends and the amino group was attached along the branch length. The quantity of plasticizing oil and resin were adjusted to maintain the Tg and the dynamic modulus of the cured rubber composition within the desired range so that with the use of a majority of the elastomer in the rubber composition being functionalized high *trans-1,4* SBR, the break in the wet braking/wear compromise was achieved.

The rubber formulations were prepared by mixing the components given in Tables **1** and **2**, except for the sulfur and the accelerators, in a Banbury mixer by the process described above. The accelerators and sulfur were added in the second phase on a mill. Vulcanization was effected and the formulations were then tested to measure their physical properties, which are reported in Tables **1** and **2.**

Tires (201/55R16 all-season variety) were manufactured using each of the formulations shown in Tables **1** and **2**. The tires were tested for their wet braking and wear performance in accordance with the test procedures described above. The test results are shown in Tables 1 and 2. All tire test results were normalized against the tires manufactured with the formulation W1. As can be seen from the results shown in the tables, in each result the compromise between wet braking and wear was broken with significant improvement in one of the characteristics without significant decrease in the other.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention without departing from its true spirit. The foregoing description is provided for the purpose of illustration only and should not be construed in a limiting sense. Only the language of the following claims should limit the scope of this invention.

## Claims

1. A tread for a tire, the tread comprising a rubber composition that is based upon a cross-linkable rubber composition, the cross-linkable rubber composition comprising, per hundred parts by weight of rubber (phr):
100 phr of rubber selected from between 50 phr and 85 phr of a functionalized styrene-butadiene rubber (SBR) and between 15 phr and 50 phr of a polybutadiene rubber, wherein the functionalized SBR includes a functional group attached as an active moiety and wherein the butadiene portion of the SBR has as *trans*-1,4 content of between 30 wt. % and 70 wt. %;
a plasticizing system comprising a plasticizing resin having a glass transition temperature (Tg) of at least 25 °C and between 5 phr and 50 phr of a plasticizing liquid, wherein the plasticizing system is added in an effective amount in a ratio of the liquid plasticizer to the resin plasticizer of between 0.1 and 0.7 to provide the rubber composition with a glass transition temperature of between -25 °C and -15 °C and with a dynamic modulus G* at 60 °C of between 0.8 MPa and 1.3 MPa;
between 60 phr and 125 phr of a silica filler; and
a sulfur curing system.

2. The tread of claim 1, wherein the functional group is selected from an amino moiety, a silanol moiety, an alkoxysilane moiety, a carboxylic moiety, a polyether moiety or combinations thereof.

3. The tread of claim 1, wherein the functional group is selected from a silanol group, an amino moiety or combinations thereof.

4. The tread of any one of the preceding claims, wherein the functional group is attached to an end of a chain of the SBR.

5. The tread of claim 1, 2 or 3, wherein the functional group is attached to a backbone of the SBR.

6. The tread of claim 1, wherein the functional group is attached to an end of the chain of the SBR, along the chain of the SBR or combinations thereof.

7. The tread of any one of the preceding claims, wherein the trans-1.4 content of the butadiene portion is between 35 wt. % and 55 wt. %.

8. The tread of claim 7, wherein the trans-1.4 content of the butadiene portion is between 37 wt. % and 43 wt. %.

9. The tread of any one of the preceding claims, wherein the plasticizing resin is a polylimonene resin.

10. The tread of any one of the preceding claims, wherein an amount of the plasticizing resin is between 40 phr and 60 phr.

11. The tread of any one of the preceding claims, wherein the liquid plasticizer is a vegetable oil having an oleic acid content of at least 70 weight percent.

12. The tread of any one of the preceding claims, wherein an amount of the liquid plasticizer is between 5 phr and 30 phr.

13. The tread of any one of the preceding claims, wherein the glass transition temperature of the rubber composition is between -20 °C and -15 °C.

14. The tread of any one of the preceding claims, wherein the dynamic modulus G* at 60 °C of the rubber composition is between 0.8 MPa and 1.2 MPa.

## Patentansprüche

1. Lauffläche für einen Reifen, wobei die Lauffläche eine Kautschukzusammensetzung umfasst, die auf einer vernetzbaren Kautschukzusammensetzung basiert, wobei die vernetzbare Kautschukzusammensetzung pro hundert Gewichtsteile Kautschuk (phr) Folgendes umfasst:
100 phr Kautschuk, der ausgewählt ist aus zwischen 50 phr und 85 phr eines funktionalisierten Styrol-Butadien-Kautschuks (SBR) und zwischen 15 phr und 50 phr eines Polybutadienkautschuks, wobei der funktionalisierte SBR eine als aktive Einheit angehängte funktionelle Gruppe aufweist und wobei der Butadienteil des SBR einen *trans*-1,4-Gehalt zwischen 30 Gew.-% und 70 Gew.-% hat;
ein Weichmachersystem umfassend ein weichmachendes Harz mit einer Glasübergangstemperatur (Tg) von mindestens 25 °C und zwischen 5 phr und 50 phr einer weichmachenden Flüssigkeit, wobei das Weichmachersystem in einer wirksamen Menge in einem Verhältnis des flüssigen Weichmachers zu dem Weichmacherharz von zwischen 0,1 und 0,7 zugesetzt wird, um der Kautschukzusammensetzung eine Glasübergangstemperatur von zwischen -25 °C und -15 °C und einen dynamischen Elastizitätsmodul G* bei 60 °C von zwischen 0,8 MPa und 1,3 MPa zu verleihen;
zwischen 60 phr und 125 phr eines Silica-Füllstoffs; und
ein Schwefelhärtungssystem.

2. Lauffläche nach Anspruch 1, wobei die funktionelle Gruppe aus einer Amino-Einheit, einer Silanol-Einheit, einer Alkoxysilan-Einheit, einer Carbonsäure-Einheit, einer Polyether-Einheit oder Kombinationen davon ausgewählt ist.

3. Lauffläche nach Anspruch 1, wobei die funktionelle Gruppe aus einer Silanolgruppe, einer Amino-Einheit oder Kombinationen davon ausgewählt ist.

4. Lauffläche nach einem der vorhergehenden Ansprüche, wobei die funktionelle Gruppe an ein Ende einer Kette des SBR angehängt ist.

5. Lauffläche nach Anspruch 1, 2 oder 3, wobei die funktionelle Gruppe an eine Hauptkette des SBR angehängt ist.

6. Lauffläche nach Anspruch 1, wobei die funktionelle Gruppe an ein Ende der Kette des SBR, entlang der Kette des SBR oder Kombinationen davon angehängt ist.

7. Lauffläche nach einem der vorhergehenden Ansprüche, wobei der *trans*-1,4-Gehalt des Butadienteils zwischen 35 Gew.-% und 55 Gew.-% beträgt.

8. Lauffläche nach Anspruch 7, wobei der *trans*-1,4-Gehalt des Butadienteils zwischen 37 Gew.-% und 43 Gew.-% beträgt.

9. Lauffläche nach einem der vorhergehenden Ansprüche, wobei das weichmachende Harz ein Polylimonenharz ist.

10. Lauffläche nach einem der vorhergehenden Ansprüche, wobei eine Menge des weichmachenden Harzes zwischen 40 phr und 60 phr beträgt.

11. Lauffläche nach einem der vorhergehenden Ansprüche, wobei der flüssige Weichmacher ein Pflanzenöl mit einem Ölsäuregehalt von mindestens 70 Gew.-% ist.

12. Lauffläche nach einem der vorhergehenden Ansprüche, wobei eine Menge des flüssigen Weichmachers zwischen 5 phr und 30 phr beträgt.

13. Lauffläche nach einem der vorhergehenden Ansprüche, wobei die Glasübergangstemperatur der Kautschukzusammensetzung zwischen -20 °C und -15 °C beträgt.

14. Lauffläche nach einem der vorhergehenden Ansprüche, wobei der dynamische Elastizitätsmodul G* bei 60 °C der Kautschukzusammensetzung zwischen 0,8 MPa und 1,2 MPa beträgt.

## Revendications

1. Bande de roulement pour un pneu, la bande de roulement comprenant une composition de caoutchouc basée sur une composition de caoutchouc réticulable, la composition de caoutchouc réticulable comprenant, pour cent parties en poids de caoutchouc (phr) :
100 phr de caoutchouc sélectionné entre 50 phr et 85 phr d'un caoutchouc butadiène-styrène fonctionnalisé (SBR) et entre 15 phr et 50 phr d'un caoutchouc polybutadiène, le SBR fonctionnalisé comprenant un groupe fonctionnel fixé en tant que fraction active, et la part de butadiène du SBR présentant une teneur en trans-1,4 comprise entre 30 % en poids et 70 % en poids ;
un système de plastification comprenant une résine plastifiante présentant une température de transition vitreuse (Tg) d'au moins 25 °C et entre 5 phr et 50 phr d'un liquide plastifiant, le système de plastification étant ajouté dans une quantité effective selon un rapport du plastifiant liquide au plastifiant résineux variant entre 0,1 et 0,7 pour fournir la composition de caoutchouc avec une température de transition vitreuse comprise entre -25 °C et -15 °C, et avec un module dynamique G* à 60 °C variant entre 0,8 MPa et 1,3 MPa ;
entre 60 phr et 125 phr d'une charge de silice ; et
un système de vulcanisation au soufre.

2. Bande de roulement selon la revendication 1, dans laquelle le groupe fonctionnel est sélectionné parmi une fraction amino, une fraction silanol, une fraction alkoxysilane, une fraction carboxylique, une fraction polyéther ou des combinaisons de celles-ci.

3. Bande de roulement selon la revendication 1, dans laquelle le groupe fonctionnel est sélectionné parmi un groupe silanol, une fraction amino ou des combinaisons de ceux-ci.

4. Bande de roulement selon l'une quelconque des revendications précédentes, dans laquelle le groupe fonctionnel est fixé à une extrémité d'une chaîne du SBR.

5. Bande de roulement selon la revendication 1, 2 ou 3, dans laquelle le groupe fonctionnel est fixé à un squelette du SBR.

6. Bande de roulement selon la revendication 1, dans laquelle le groupe fonctionnel est fixé à une extrémité de la chaîne du SBR, le long de la chaîne du SBR ou selon des combinaisons de ceux-ci.

7. Bande de roulement selon l'une quelconque des revendications précédentes, dans laquelle la teneur en trans-1,4 de la part de butadiène varie entre 35 % en poids et 55 % en poids.

8. Bande de roulement selon la revendication 7, dans laquelle la teneur en trans-1,4 de la part de butadiène varie entre 37 % en poids et 43 % en poids.

9. Bande de roulement selon l'une quelconque des revendications précédentes, dans laquelle la résine plastifiante est une résine polylimonène.

10. Bande de roulement selon l'une quelconque des revendications précédentes, dans laquelle une quantité de la résine plastifiante varie entre 40 phr et 60 phr.

11. Bande de roulement selon l'une quelconque des revendications précédentes, dans laquelle le plastifiant liquide est une huile végétale présentant une teneur en acide oléique d'au moins 70 pourcent en poids.

12. Bande de roulement selon l'une quelconque des revendications précédentes, dans laquelle une quantité de plastifiant liquide varie entre 5 phr et 30 phr.

13. Bande de roulement selon l'une quelconque des revendications précédentes, dans laquelle la température de transition vitreuse de la composition de caoutchouc varie entre -20 °C et -15 °C.

14. Bande de roulement selon l'une quelconque des revendications précédentes, dans laquelle le module dynamique G* à 60 °C de la composition de caoutchouc varie entre 0,8 MPa et 1,2 MPa.
